# EUROPEAN PATENT SPECIFICATION

(11) **EP 1 643 172 B1**
(45) Date of publication and mention of the grant of the patent: **18.06.2008**
(21) Application number: 05255785.7
(22) Date of filing: 19.09.2005
(51) Int. Cl.: F16J 15/44, F01D 11/22

(54) **Compliant seal and system and method thereof**
Nachgiebige Dichtungsanordnung, Sytem und Verfahren
Dispositif d'étanchéité flexible, système et méthode

(30) Priority: 30.09.2004 US 955079
(43) Date of publication of application: 05.04.2006
(73) Proprietor: GENERAL ELECTRIC COMPANY, Schenectady, New York 12345 (US)
(72) Inventor: Ghasripoor, Farshad, Scotia New York 12302 (US); Awtar, Shorya, Clifton Park New York 12065 (US); Turnquist, Norman Arnold, Sloansville New York 12160 (US); Fang, Biao, Clifton Park New York 12065 (US); Flecker, Carl Anthony, III, Loveland Ohio 45140 (US); Stegmaier, James William, West Chester Ohio 45069 (US); Nichols, Glenn Herbert, Mason Ohio 45040 (US); Przytulski, James Charles, Fairfield Ohio 45014 (US); Brink, Kurt Grover, Mason Ohio 45040 (US); Lykins, Richard Cohen, Kettering Ohio 45429 (US); Thyssen, Jeffrey Reid, Delmar New York 12054 (US); Aksit, Mahmut Faruk, Istanbul 34738 (TR)
(74) Representative: Pedder, James Cuthbert

(56) References cited:
- US-A- 5 002 288
- US-A- 5 344 284
- US-A1- 2003 080 513
- US-A1- 2004 012 149
- US-B1- 6 250 641
- US-B1- 6 572 115

## Description

The invention relates generally to the field of rotating machines, and in particular to turbine engines. Specifically, embodiments of the present technique provide a compliant seal between rotating and static components in such machines.

A number of applications call for sealing arrangements between rotating and stationary components. Such seals may vary in construction, depending upon such factors as the environments in which they function, the fluids against which they form a seal, and the temperature ranges in which they are anticipated to operate. In turbine and similar applications, for example, seals are generally provided between the various stages of rotating components, such as turbine blades, and corresponding stationary structures, such as housings or shrouds within which the rotating components turn.

Efficiency and performance of gas and steam turbines are affected by clearances between rotating blade tips and the stationary shrouds, as well as between the nozzle tips and the rotor. In the design of gas and steam turbines, it is desirable to have a close tolerance between the tips of the rotating blades and the surrounding static shroud. In a turbine engine, the portion of the working fluid passing through the clearance between the tips of the rotating blades and the stationary shroud does no work on the blades, and leads to a reduced efficiency of the engine. Generally, the closer the shroud or stationary component surrounds the tips of the rotating blades, the greater is the efficiency of the turbine engine.

However, clearance dimensions between the rotating blade tips and the stationary shroud may vary at different times during the operation of the turbine engine. For example, the clearance decreases significantly due to dissimilar thermal growths, non-uniformity or transient motion between adjacent rotating and static components, causing interfacing surfaces to rub. Such a rub may lead to rapid wear of the blade and the stationary shroud, and may set up forced vibrations in the turbine engine. Wear on the shroud and the rotating blades is undesirable as it increases clearance dimensions and leads to a further loss in efficiency.

Prior methods to solve the above problem include using a seal on the stationary shroud surface, the sealing material being designed to be wearable or abradable with respect to the rotating blade rubbing against them. In such a system, a rub or contact of the blade tips with the stationary shroud causes the abradable shroud material to abrade or flake off. This avoids damage to the rotating components, and provides reduced clearances and thus better sealing as compared to a non-abradable system, in which large cold-built clearances have to be provided to prevent rubbing during transient conditions, such as dissimilar thermal growths between rotating and static components. However, this abradable system suffers from the disadvantage of reduced life of the sealing material. Also, previous abradable seals, even though various materials for the shroud have been proposed such as sintered metal, metal honeycombs and porous ceramics, have not provided a desirable compliance. Further, after a rub or a contact due to a transient condition, the gap or wear produced by the rub or contact is larger than the interference depth, due to tearing out, galling and spalling.

Accordingly, there is a need for a sealing technique to minimize the damage caused to the rotating and static components due to rubbing during transient periods, and to reduce vibration levels in the turbine engine caused by the same. One proposal for this has been shown in US 6 572 115

The present invention provides a novel sealing approach designed to respond to such needs.

According to a first aspect of the invention, there is provided a seal assembly for a rotating machine, comprising a static member adapted to be rigidly fixed to the rotating machine between a fore end and an aft end of the rotating machine; a movable member mounted on the static member, the movable member further comprising a first sealing surface configured to seal against a rotating member in a sealing position; a rear surface adapted to be exposed to a fluid pressure to urge the first sealing surface toward the sealing position and sealing surfaces along fore, aft and end faces of the movable member adapted to interface with sealing surfaces along fore, aft and end faces of the static member, to seal between the static member and the movable member at the fore, aft and end faces of the static member and the movable member; and a biasing member configured to support the movable member on the static member and to urge the movable member away from the sealing position characterised in that the sealing surfaces along the fore and aft faces of the movable member comprise beveled surfaces adapted to align with beveled surfaces along the fore and aft faces of the static member.

According to a second aspect of the invention, there is provided a method for manufacturing a seal assembly comprising mounting a movable member on a static member; aligning fore and aft sealing surfaces of the movable member with fore and aft sealing surfaces on the static member at a fore end and an aft end of the seal assembly; providing at least one opening on the static member, wherein the opening is configured to expose the movable member to a gas pressure to urge the movable member toward a sealing position; and disposing a biasing member on the movable member to support the movable member on the static member and to urge the movable member away from the sealing position characterised in that the aligning of the fore and aft sealing surfaces of the movable member with fore and aft sealing surfaces on the static member comprises aligning beveled surfaces of the fore and aft sealing surfaces of the movable member with beveled surfaces on the static member along the fore and aft faces of the static member.

The invention will now be described in greater detail, by way of example, with reference to the drawings, in which:-
FIG. 1 is a cross sectional view of a portion of a turbine engine incorporating a compliant seal assembly in accordance with aspects of the present techniques;
FIG. 2 is a cross sectional schematic view illustrating the configuration of a system including a compliant seal assembly in the absence of fluid back pressure;
FIG. 3 is a cross sectional schematic view illustrating the configuration of a system including a compliant seal assembly exposed to fluid back pressure;
FIG. 4 is a cross sectional schematic view illustrating the configuration of a compliant seal assembly exposed to fluid back pressure, during rub or contact between the movable member and the rotating member;
FIG. 5 is a cross sectional view illustrating a compliant seal assembly having beveled edges at the fore and aft ends, in accordance with aspects of the present techniques, when biasing effect of the biasing member is greater than the fluid back pressure;
FIG. 6 is a cross sectional view illustrating a a compliant seal assembly having beveled edges at the fore and aft ends, in accordance with aspects of the present techniques, when biasing effect of the biasing member is less than the fluid back pressure;
FIG. 7 is a cross sectional view of a compliant seal assembly having a rope seal engaged between the retaining extension and the static member;
FIG. 8 is a cross sectional view of a compliant seal assembly having a rope seal engaged between the compliant member and the static member at the fore and aft ends of the seal assembly.
FIG. 9 is a perspective view showing a cut section along a segment of a compliant seal assembly having a double lip seal at the end faces of the compliant seal assembly;
FIG. 10 is a perspective view showing a cut section along a segment of a compliant seal assembly, having a W-seal engaged between the static and the movable members at the end faces of the seal assembly;
FIG. 11 is a perspective view showing a cut section along a segment of a compliant seal assembly, having a rope engaged between the static and the movable members at the end faces of the seal assembly;
FIG. 12 is a cross sectional schematic view of a compliant seal, assembled in accordance with one embodiment of the present techniques;
FIG. 13 is a cross sectional schematic view of a compliant seal, assembled in accordance with another embodiment of the present techniques;
FIG. 14 is a perspective view of a compliant seal, assembled in accordance with yet another embodiment of the present techniques, wherein the movable member is slidably fitted on to the static member through an opening in the static member via a window on the end face;
FIG. 15 is a perspective view of a compliant seal, assembled in accordance with yet another embodiment of the present techniques, wherein the movable member is slidably fitted on to the static member through an opening in the static member via a cut on the end face;
FIG. 16 is a perspective view of a compliant seal assembly having a leaf spring as the biasing member according to one embodiment of the present techniques;
FIG. 17 is a perspective view of a compliant seal assembly having a cantilever spring as the biasing member; and
FIG. 18 is a perspective view of the movable member of FIG. 17 having cantilever blocks integral to it.

The following description presents a novel approach for sealing between rotating and static components in rotating machines. One example of a rotating machine is a turbine, which finds applications in aircraft engines, and industrial and marine power generation systems, to mention only a few. In accordance with certain embodiments of the present techniques, the shroud surrounding the rotating blades of the turbine includes a stationary portion, and a compliant portion. The compliant portion is capable of moving radially outward during contact or rub with the blades, thus reducing wear on the rotating blades as well as on the surrounding shroud.

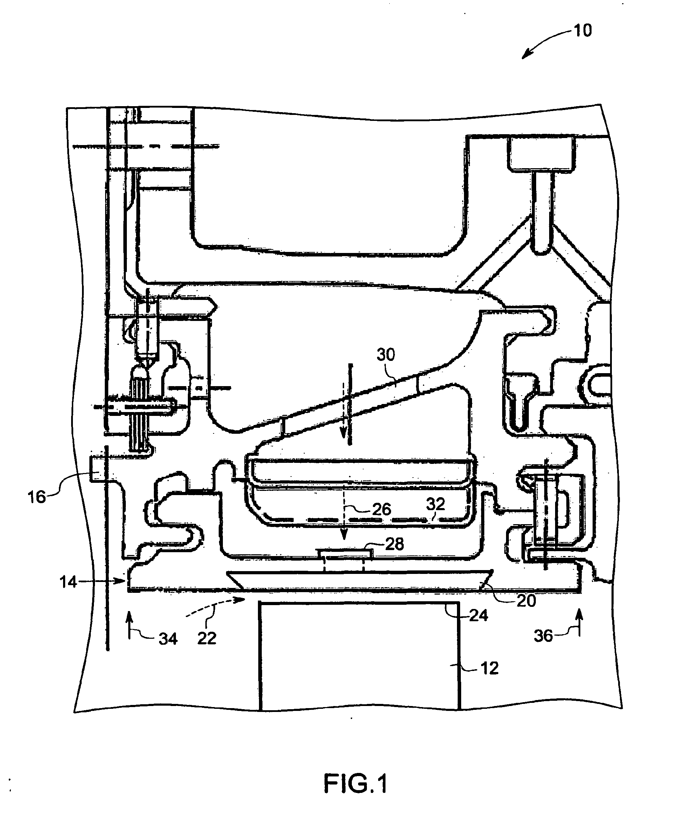

Referring now to FIG. 1, there is illustrated an exemplary portion of a turbine, designated generally by the reference numeral 10. Turbine 10 includes multiple blades 12, mounted on a rotor (not shown). Blades 12 rotate inside a stationary housing or shroud assembly 14, which is mounted on to a hanger 16. In accordance with the embodiment illustrated, the shroud assembly 14 includes a static member 18, also referred to as a static shroud, which is rigidly fixed or hooked to the hanger 16, and a movable member 20, also referred to as a compliant shroud. In certain embodiments, the shroud assembly 14 is retrofitable in existing turbines with no modification or removal of the hanger 16. As will be described in great detail in the following sections, the static member 18 and the movable member 20 provide a compliant seal for a gas path 22 between the blades 12 and the shroud assembly 14.

The movable member 20 is biased toward a tip 24 of the rotating blade 12 by a fluid pressure, which in the illustrated embodiment is a pressure exerted by a cooling gas 26 on a rear surface 28 of the movable member. This fluid pressure is also referred to as back pressure. Although the illustrated embodiment shows a blade 12 with a bare tip 24, other embodiments may include blades that have a shrouded tip having outwardly extending continuous knife edges or rails, that mesh with inwardly extending knife edges or rails on the surrounding shroud. The cooling gas 26 enters the shroud assembly 14 via a hole 30 provided on the hanger 16, and may be directed toward the movable member 20 via baffles 32 or pores (not shown). The cooling gas 26 may then be directed toward a fore end 34 of the shroud assembly 14. This aids cooling the fore end 34, which is at a relatively higher temperature than an aft end 36. In the present description, the term fore end refers to the end from which the hot gas or working fluid flows on to the rotating blade, and the term aft end refers to the end to which the hot gas flows after doing work on the rotating assembly.

The present techniques incorporate back pressure of the cooling gas 26 to provide an increased resistance in the path 22 of the hot gas, thus creating a higher pressure differential of the hot gas between the fore and aft ends. This increases the work done on the rotating blade 12 by the hot gas, and hence improves turbine efficiency. Further, in accordance with the present techniques, the compliant seal assembly, including the static member 18 and the movable member 20 is configured to reduce reaction force on the blades 12, as well as on the shroud 16 during rubbing or interference of static and rotating components during certain transient periods.

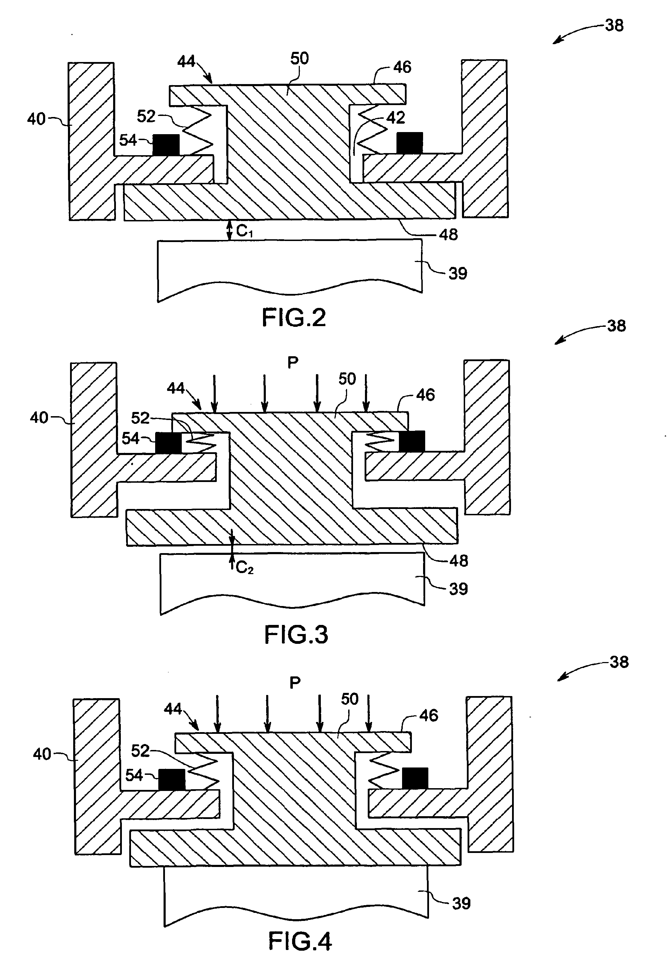

Referring generally to FIGS. 2-4, which do not fall under the scope of the claims but are useful for understanding the invention, a compliant sealing mechanism is schematically illustrated for a system 38, which may comprise a rotating machine, such as a turbine, having a rotating member 39, such as a blade. The system 38 includes a static member 40 having a slot 42. A movable member 44 is mounted on the static member 40. The movable member 44 has a rear surface 46, a sealing surface 48, and an extension 50, which extends through the slot 42 of the static member 40. The movable member 44 is supported on the static member 40 by a biasing member 52. An example of a biasing member is a spring, such as a leaf spring, or a cantilever spring, as described hereinafter. The biasing member is configured to urge the movable member away from the rotating member 39. This may be achieved by pre-loading the biasing member 52 at the time of assembly. The biasing member 40 may also be adapted to provide mechanical stability to the movable member 44 during steady state operation of the machine.

FIG. 2 illustrates a configuration of the system 38 at a no-load condition when there is a relatively small fluid pressure applied on the rear surface 46 of the movable member 44. An example of such a condition is during start-up of the rotating machine. Under such a condition, a clearance C₁ exists between the sealing surface 48 of the movable member 44 and the rotating member 39.

FIG. 3 illustrates a configuration of the system 38 when a fluid pressure P is applied on the rear surface 46 of the movable member 44. In case of a turbine, as described earlier, the fluid pressure at full load is provided by a cooling gas via an opening in the stationary housing. The fluid pressure P on the rear surface 46 urges the sealing surface 48 radially inward, toward a sealing position with the rotating member 39. A hard stop 54 may be provided to limit the radially inward fluid pressure activated motion of the movable member 44. Under such a condition, a clearance C₂ between the sealing surface 48 of the movable member 44 and the rotating member is significantly less then the clearance C₁ at no load as illustrated in FIG. 2. The fluid pressure P thus reduces leakage of the working fluid between the static and rotating components, and hence increases useful work done by the working fluid on the rotating member 39. The biasing member 52 is configured to urge the movable member 44 radially outward, away from the sealing position with the rotating member 39, against the force exerted by the fluid pressure.

FIG. 4 illustrates a configuration of the system 38 during a rub, contact or interference of the rotating member 39, with the movable member 44. Such a condition may arise during a thermal transient period, wherein there is a dissimilar thermal growth between static and rotating components. Under such a condition, the contact force or reaction on the rotating member 39 and the movable member 44 is significantly reduced by the biasing member 52, which exerts a radially outward force on the movable member 44, to urge the sealing surface 48 of the movable member 44 away from the rotating member 39. This causes the rub or contact to be less severe, which reduces wear on the interfacing surfaces, thus increasing the life of rotating and static components of rotating machines. The reduction of contact force also leads to significantly lower vibration levels in such machines.

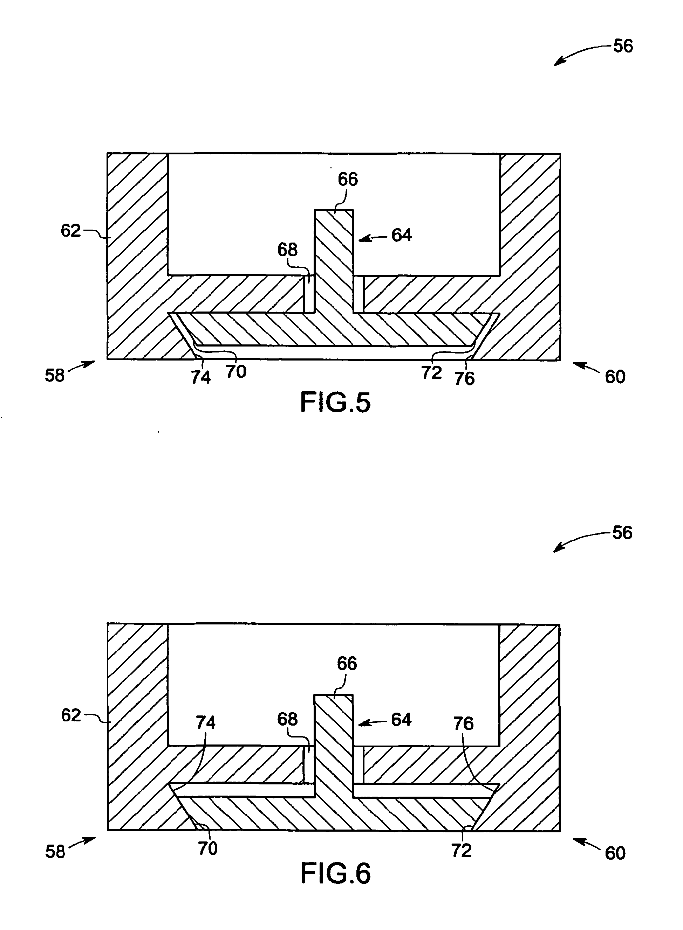

Referring generally to FIGS. 5 and 6, a cross-section of a compliant seal assembly 56 in accordance with aspects of the present techniques is illustrated. FIG. 5 shows the configuration of the compliant seal assembly 56 when biasing effect of the biasing member is greater than the fluid back pressure. The fore end and the aft end of the seal assembly 56 are represented generally by the numerals 58 and 60 respectively. The seal assembly includes a static member 62 and a movable member 64 having an extension 66, which is inserted through a window-like slot 68 in the static member 62. The movable member 64 includes beveled surfaces 70 and 72, aligned with corresponding beveled surfaces 74 and 76 of the static portion, extending along an arc length of the seal assembly perpendicular to the plane of the figures, along the fore and aft ends respectively.

The above arrangement is advantageous in several ways. The beveled surfaces 70, 74 and 72, 76 provide a natural sealing between the static member 62 and the movable member 64 at the fore and aft ends. This sealing surface provides sufficient back pressure to purge the cavities of the compliant shroud assembly. This also reduces hot gas ingestion into the cooling gas in case of a negative pressure differential between the hot gas and the cooling gas. Further, the beveled surfaces provide a natural hard stop to limit the radially inward motion of the movable member caused by the fluid pressure when biasing effect of the biasing member is less than the fluid back pressure, as shown in FIG. 6. This prevents damage to the movable member and the rotating blades in case of a failure of the biasing member (not shown). As can be appreciated, the above arrangement further provides mechanical support to the movable member 64, which reduces vibration of the movable member 64, thus providing mechanical stability during steady state conditions.

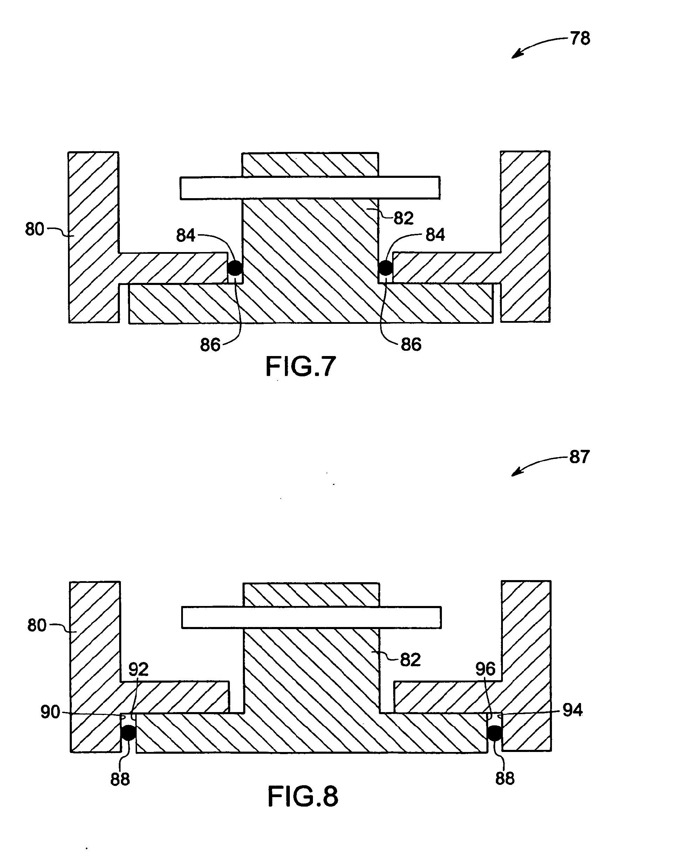

FIG. 7, which does not fall under the scope of the claims, illustrates a cross section of a compliant seal assembly 78 according to another embodiment of the present techniques. In this case, sealing between static member 80 and movable member 82 is provided by rope seals 84, which are engaged between the static and the movable member at slot 86. The rope seals 84 extend along the length of the slot 86 in a circumferential direction (perpendicular to the plane of the figure), providing sufficient back pressure to purge the cavities of the compliant shroud assembly and preventing hot gas ingestion into the cooling gas through the slot 86. Yet another approach for sealing at the fore and aft ends is illustrated in FIG. 8, which also does not fall under the scope of the claims, for compliant seal assembly 87. Here, rope seals 88 are engaged between surfaces 90 and 92 and between surfaces 94 and 96 of the static member 80 and the movable member 82 respectively. Again, other types and configurations of seals may be employed in place of the rope seals shown.

The various embodiments of the compliant seal assembly described earlier may form a complete ring, or a segment of a ring. However, rotating machines, such as turbines may generally comprise multiple segments of the compliant seal assembly positioned circumferentially adjacent to each other. Each segment has two end faces, which interface with corresponding end faces of the adjacent segments. As will be appreciated hereinafter, aspects of the present techniques can be used to provide static sealing at the end faces of the compliant seal assembly, and also to minimize interference of the rotating blades at the interface between two adjacent compliant seal assembly segments.

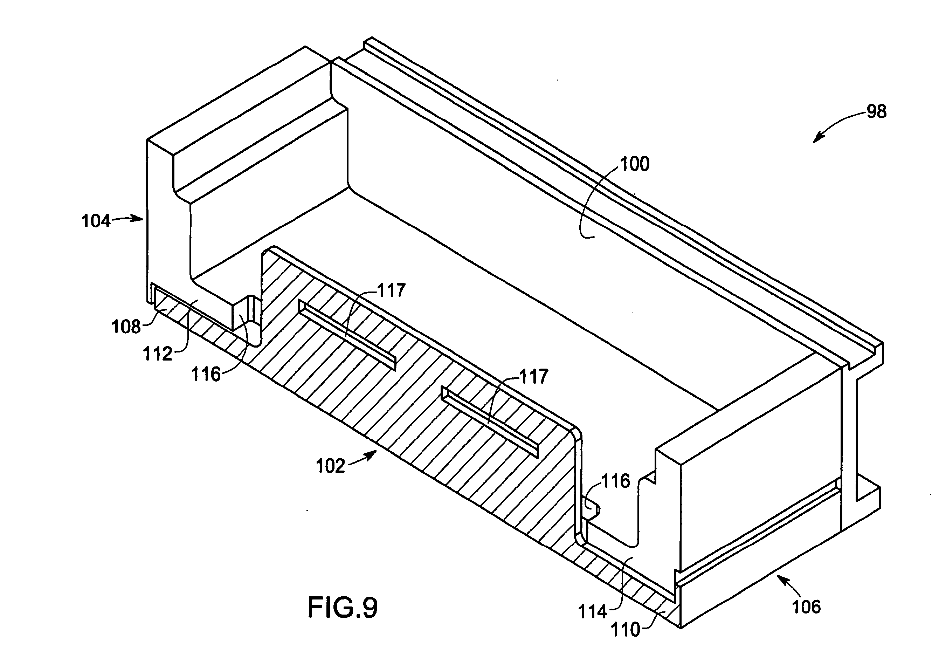

FIG. 9 illustrates a segment of a compliant seal assembly 98 having a static member 100 and a movable member 102. The figure shows a cut section the movable member 102 as viewed from the fore end in the direction of the aft end of the seal assembly 98. End faces of the compliant seal assembly 98 are represented by the reference numerals 104 and 106. The movable member has protruding structures or lips 108 and 110, which overlap with corresponding lips 112 and 114, respectively, provided on the static member 100. This provides a seal between the static member 100 and the movable member 102 at the end faces, and prevents leakage of the cooling fluid through the end faces. The above described arrangement is also referred to as a double lip seal arrangement. Further, in one embodiment, slots 117 may be provided in the movable member 102 for insertion of a biasing member (not shown) to urge the movable member 102 from a sealing position.

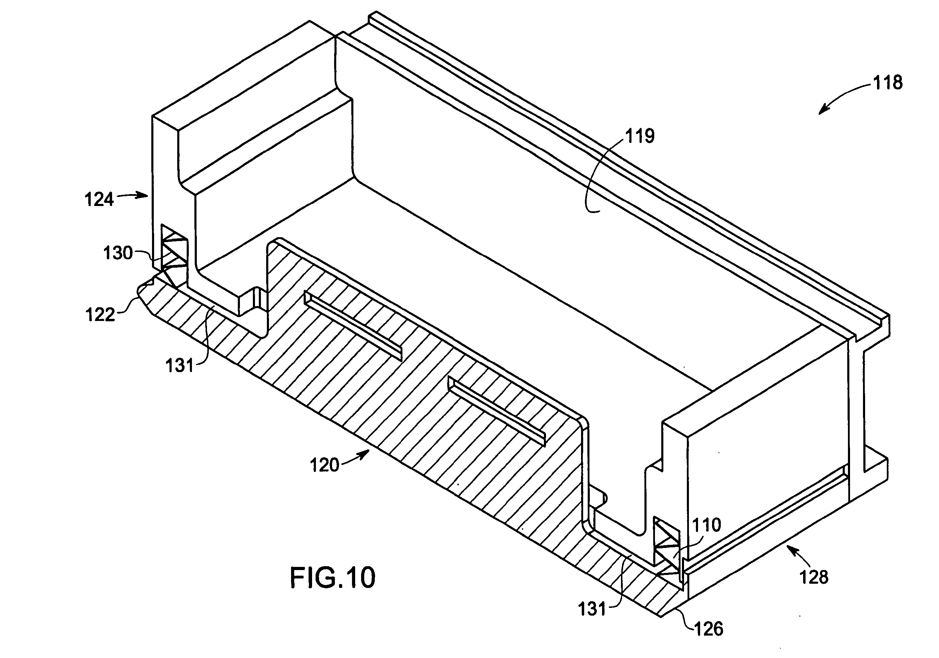

FIG. 10 illustrates another approach for end face sealing. In this embodiment, a seal assembly segment 118 comprises a static member 119 and a movable member 120 having a chamfer 126 at end face 128, and a protrusion 122 at end face 124, such that the chamfer of one segment interfaces with a protrusion of an adjacent segment, thus providing effective cascading of adjacently positioned compliant seal segments. This reduces interference by rotating blades at the interfacing sections between adjacent segments.

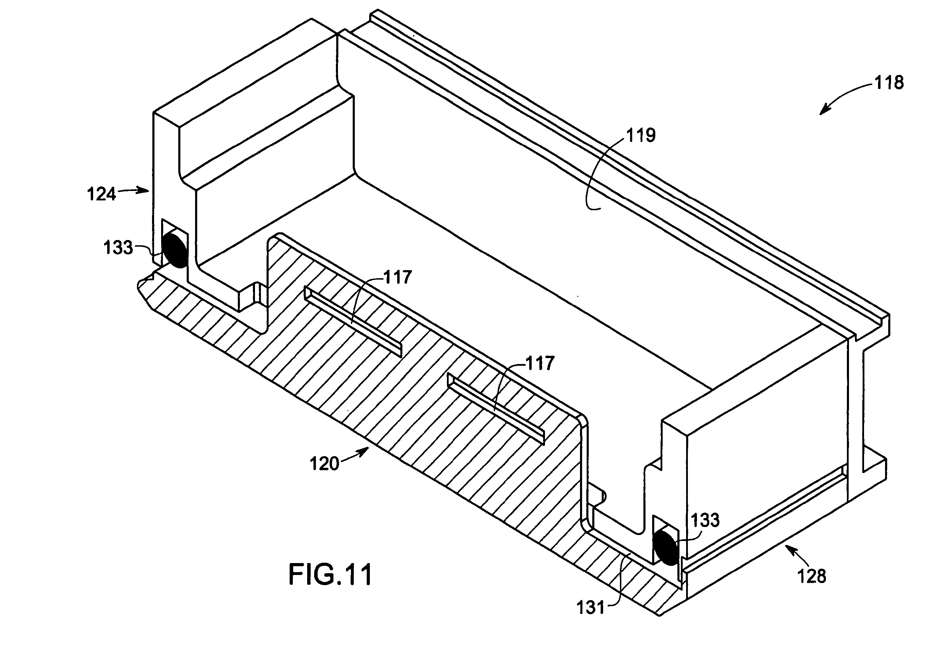

Interface seals 130 are engaged between the movable member 120 and the static member 119 at the two end faces 124 and 128, to provide adequate back pressure to purge the opening 131. In this embodiment, the interface seals 130 have a W-shaped cross section. In a different embodiment, rope seals 133 may be used in place of W-shaped seals, as illustrated in FIG. 11. Again, other seal configurations may be used in place of these.

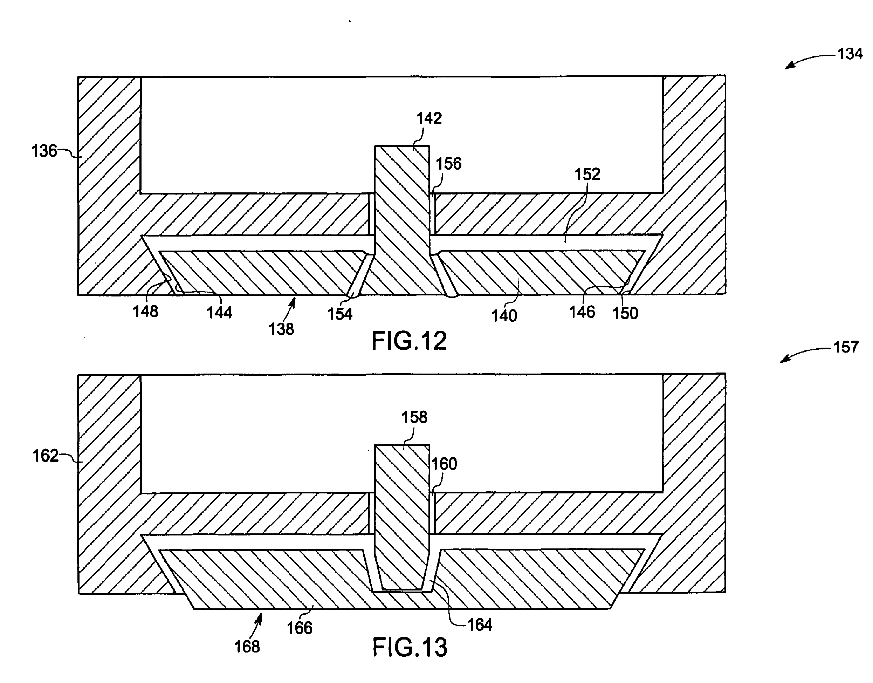

Aspects of the present techniques also provide for manufacturing and assembly of a compliant seal. FIG. 12 illustrates the manufacture and assembly of a compliant seal 134 according to one embodiment of the present techniques. In the illustrated embodiment, the compliant seal 134 comprises a static member 136 and a movable member 138 having a base 140 and a rib or a retaining extension 142. The base 140 has beveled surfaces 144 and 146, which are adapted to be aligned with beveled surfaces 148 and 150 provided on the static member 136. In this embodiment, the base 140 and the rib 142 are manufactured separately. The base 140 is inserted from an end face into a cavity 152 on the static member formed by the beveled surfaces 148 and 150 on the static member 136, such that the beveled surfaces 144 and 146 on the base 140 align with beveled surfaces 148 and 150 on the static member 136. The rib 142 is then inserted from the bottom into a slot 154 provided on the base 140, and extended through the static member 136 through a slot 156 on the static member 136. The rib 142 is then fixedly joined to the base 140. In an exemplary embodiment, this is achieved by brazing the rib 142 on to the base 140. Other techniques for fixing these parts together may, of course, be used. As illustrated in the figure, the lower portion of the rib 142 is angled outwards. This configuration advantageously creates a compressive force on the brazed joint during contact of the movable member 138 with the rotating blades, thus providing structural strength to the brazed joint.

FIG. 13 illustrates an alternative technique for manufacturing and assembling a compliant seal 157. In this embodiment, the rib 158 is inserted from the top via a slot 160 provided on the static member 162, into a cavity 164 on the base 166 of the movable member 168. Unlike in the earlier embodiment, the rib 158 does not extend through the base 166. This technique thus advantageously provides a continuous interfacing surface of the base 166 with the rotating blades during a rub or contact, thereby minimizing interference and vibration.

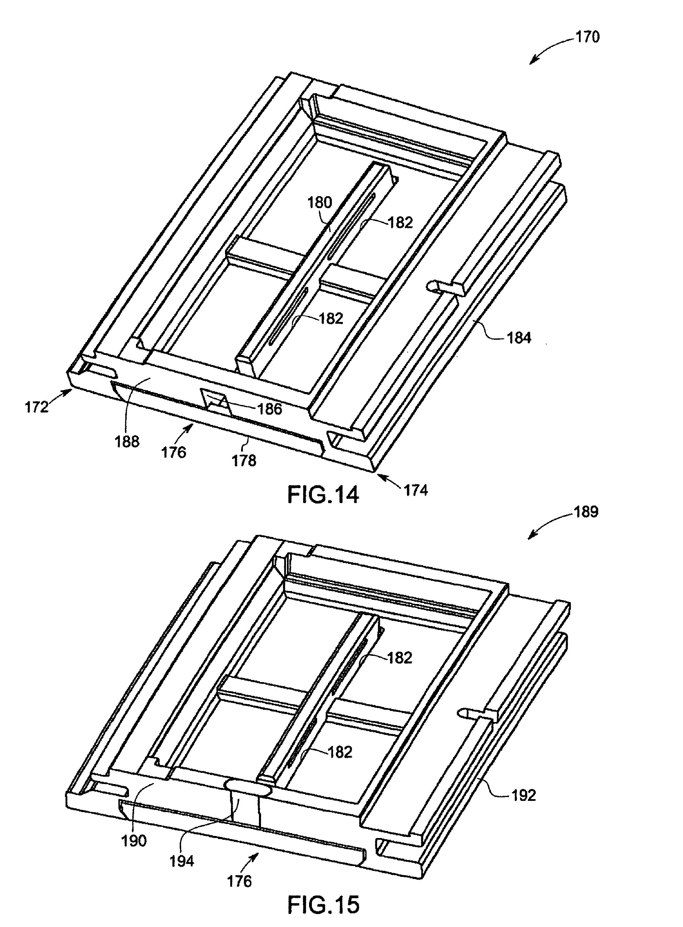

In still further embodiments, the movable member is manufactured in a single piece, i.e. the rib or retaining extension is integral to the movable member. FIG. 14 illustrates a segment of a compliant seal 170 in which the fore and aft ends are represented by numerals 172 and 174, respectively. In this embodiment, the movable member 176 is manufactured as a single unit having a base 178 and a rib or retaining extension 180. The movable member 176 is inserted into a slot 182 in the static member 184 via a window or opening 186 provided on one end face 188 of the static member 184. After assembly, the window 186 may be plugged and then sealed by brazing or staking to prevent superfluous leakage. Alternatively, as shown for the compliant seal 189 in FIG. 15, instead of providing an opening along a portion of the height of the end face 190 of the static member 192, a cut or opening 194 may be provided along the entire height of the end face 190. The movable member 176 is then slid into the slot 182 through the opening 194, which is then plugged and sealed by brazing, staking, or any other suitable operation.

In accordance with the present techniques, the compliant seal is provided with a biasing member, which is generally preloaded at the time of assembly, to bias the movable member away from a sealing position with the rotating blades, to reduce the force on the blades and on the movable member during contact or rub of blades with the movable member. However, the arrangements proposed employ gas pressure, already present in the machine in the embodiments shown, to urge the seals towards their sealing position. Due to the differential pressure across the sealing assemblies, then, the sealing position is maintained, while allowing for compliance of the sealing assemblies with the rotating components by virtue of the movement of the movable members, and the aid of the biasing members.

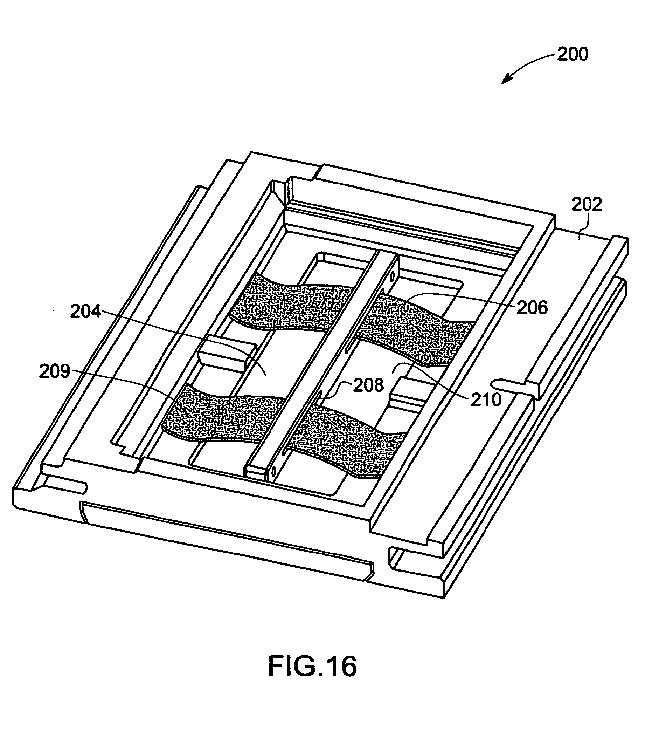

FIG 16 illustrates a compliant seal 200 having a static member 202, a movable member 204 and one or more biasing members 206, which in the illustrated embodiment are leaf springs, also referred to as cockle springs. In one embodiment, the leaf springs 206 are inserted through slots 208 provided on the movable member 204, and fixed to the static member 202 at the ends 209, to support the movable member 204 on the static member 202. At the time of assembly, the leaf springs are preloaded by compression to exert a radially outward force on the movable member 204, which reduces contact load on the movable member 204 during contact or rub with the blades. Advantageously, in the illustrated embodiment, rear surface 210 of the movable member 204 presents a relatively large surface for exposure to a fluid pressure, thus effectively urging the compliant seal towards rotating blades.

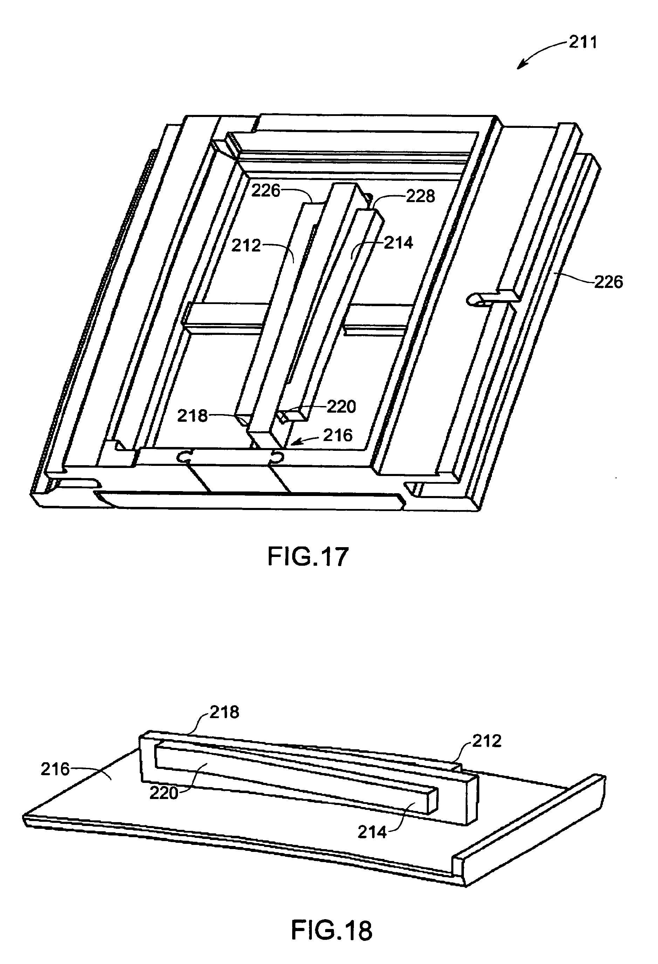

FIG. 17 illustrates a compliant seal 211 incorporating an alternative biasing technique using cantilever springs as biasing members. In this embodiment, the blocks 212 and 214 are integral to and may be cast together with the movable member 216, separately illustrated in FIG. 18. Blocks 212 and 214 are integrally fixed to the movable member 216 at ends 218 and 220, and interface with an inner surface 222 of static member 224 at ends 226 and 228 at the time of assembly, such that the blocks 212 and 214 are preloaded by their angular position, which may result from bending. This causes the blocks 212 and 214 to function as cantilevers which bias the movable member 216 radially outward, away from a sealing position with the rotating blades, thus reducing contact load on the movable member 216 during contact or rub with the blades.

As noted above, the present techniques may be employed on new machines (i.e. in their original design), or may be retrofit to existing equipment. Because conventional turbines typically include some sort of hanger profile for seals, the compliant seal assemblies may be designed to fit and interface with such hangers in place of conventional seals. The conventional seals may thus be removed, such as during regular or special servicing of the machine, and replaced with the compliant structures provided by the present techniques.

The above described sealing techniques thus provide effective sealing against hot gas leakage at the fore and aft ends, as well as at the end faces, while also providing improved mechanical strength and stability of the seal. This, in turn leads to higher work efficiency and increased life of the seal and the rotating blades. An important feature of the present techniques is that they can be used turbine stages where the rotor blades may be shrouded or unshrouded. Further, as noted above, the various embodiments of the compliant seal described herein are retrofitable, i.e. they can be used in existing machines with minimum changes to the existing design, and minimum number of new parts.

## Claims

1. A seal assembly (14 38, 56,88, 87, 98, 134, 157, 170, 200, 211) for a rotating machine (10), comprising:
a static member (18, 40, 62,80, 100, 119, 136162, 184, 192, 202, 226) adapted to be rigidly fixed to the rotating machine (10) between a fore end (34,58, 172) and an aft end (36, 60, 174) of the rotating machine (10);
a movable member (20, 50, 66, 82, 102, 120, 120, 138, 168, 176, 210, 216) mounted on the static member (18, 40, 62,80, 100, 119, 136162, 184, 192, 202, 226), the movable member (20, 50, 66, 82, 102, 120, 120, 138, 168, 176, 210, 216) further comprising:
a first sealing surface (48) configured to seal against a rotating member (12, 39) in a sealing position;
a rear surface (46) adapted to be exposed to a fluid pressure to urge the first sealing surface (48) toward the sealing position; and
sealing surfaces (70, 72, 108, 110) along fore, aft and end faces of the movable member (20, 50, 66, 82, 102, 120, 120, 138, 168, 176, 210, 216) adapted to interface with sealing surfaces (74, 76, 112, 114) along fore, aft and end faces of the static member (18, 40, 62,80, 100, 119, 136162, 184, 192, 202, 226), to seal between the static member (18, 40, 62,80, 100, 119, 136, 162, 184, 192, 202, 226) and the movable member (20, 50, 66, 82, 102, 120, 120, 138, 168, 176, 210, 216) at the fore, aft and end faces of the static member (18, 40, 62,80, 100, 119, 136162, 184, 192, 202, 226) and the movable member (20, 50, 66, 82, 102, 120, 120, 138, 168, 176, 210, 216); and
a biasing member (52, 206, 212, 214) configured to support the movable member (20, 50, 66, 82, 102, 120, 120, 138, 168, 176, 210, 216) on the static member (18, 40, 62,80, 100, 119, 136, 162, 184, 192, 202, 226) and to urge the movable member (20, 50, 66, 82, 102, 120, 120, 138, 168, 176, 210, 216) away from the sealing position **characterised in that** the sealing surfaces along the fore and aft faces of the movable member (20, 50, 66, 82, 102, 120, 120, 138, 168, 176, 210, 216) comprise beveled surfaces (70, 72) adapted to align with beveled surfaces (74, 76) along the fore and aft faces of the static member (18, 40, 62,80, 100, 119, 136162, 184, 192, 202, 226).

2. The seal assembly (14,38, 56,88, 87, 98, 134, 157, 170, 200, 211) of claim 1, wherein the movable member (20, 50, 66, 82, 102, 120, 120, 138, 168, 176, 210, 216) further comprises a retaining extension extending through a slot in the static member (18, 40, 62,80, 100, 119, 136162, 184, 192, 202, 226).

3. The seal assembly (14, 38, 56,88, 87, 98, 134, 157, 170, 200, 211) of claim 1, wherein the biasing member comprises a leaf spring (206).

4. The seal assembly (14,38, 56, 88, 87, 98, 134, 157, 170, 200, 211) of claim 1, wherein the biasing member comprises a cantilever spring (214, 216).

5. The seal assembly (14, 38, 56, 88, 87, 98, 134, 157, 170, 200, 211) of claim 1, wherein the movable member (20, 50, 66, 82, 102, 120, 120, 138, 168, 176, 210, 216) comprises a lip (108, 110) configured to overlap with a lip (112, 114) provided on the static member (18, 40, 62,80, 100, 119, 136, 162, 184, 192, 202, 226) at the end face (104, 106) of the static member (18, 40, 62,80, 100, 119, 136,162, 184, 192, 202, 226).

6. A method for manufacturing a seal assembly (14, 38, 56, 88, 87, 98, 134, 157, 170, 200, 211), comprising:
mounting a movable member (20, 50, 66, 82, 102, 120, 120, 138, 168, 176, 210, 216) on a static member (18, 40, 62,80, 100, 119, 13, 162, 184, 192,202,226);
aligning fore and aft sealing surfaces (70, 72) of the movable member (20, 50, 66, 82, 102, 120, 120, 138, 168, 176, 210, 216) with fore and aft sealing surfaces (74, 76) on the static member (18, 40, 62,80, 100, 119, 136162, 184, 192, 202, 226) at a fore end (34,58, 172) and an aft end (36, 60, 174) of the seal assembly (14, 38, 56,88, 87, 98, 134, 157, 170, 189, 200, 211);
providing at least one opening (42, 68, 156, 160) on the static member (18, 40, 62,80, 100, 119, 136,162, 184, 192, 202, 226), wherein the opening (42, 68, 156, 160) is configured to expose the movable member (20, 50, 66, 82, 102, 120, 120, 138, 168, 176, 210, 216) to a gas pressure to urge the movable member (20, 50, 66, 82, 102, 120, 120, 138, 168, 176, 210, 216) toward a sealing position; and
disposing a biasing member (52, 206, 212, 214) on the movable member (20, 50, 66, 82, 102, 120, 120, 138, 168, 176, 210, 216) to support the movable member (20, 50, 66, 82, 102, 120, 120, 138, 168, 176, 210, 216) on the static member (18, 40, 62,80, 100, 119, 136, 162, 184, 192, 202, 226) and to urge the movable member (20, 50, 66, 82, 102, 120, 120, 138, 168, 176, 210, 216) away from the sealing position **characterised in that**
the aligning of the fore and aft sealing surfaces (70, 72) of the movable member (20, 50, 66, 82, 102, 120, 120, 138, 168, 176, 210, 216) with fore and aft sealing surfaces (74, 76) on the static member (18, 40, 62,80, 100, 119, 136,162, 184, 192, 202, 226) comprises aligning beveled surfaces (70, 72) of the fore and aft sealing surfaces of the movable member (20, 50, 66, 82, 102, 120, 120, 138, 168, 176, 210, 216) with beveled surfaces (74, 76) on the static member (18, 40, 62, 80, 100, 119, 136, 162, 184, 192, 202, 226) along the fore and aft faces of the static member (18, 40, 62, 80, 100, 119, 136, 162, 184, 192, 202, 226)..

7. The method of claim 6, wherein the movable member (20, 50, 66, 82, 102, 120, 120, 138, 168, 176, 210, 216) comprises a base (14) having the fore and aft sealing surfaces (70, 72) and a retaining extension (142, 158), and wherein mounting the movable member (20, 50, 66, 82, 102, 120, 120, 138, 168, 176, 210, 216) on the static member (18, 40, 62,80, 100, 119, 136162, 184, 192, 202, 226) further comprises:
inserting the base from an end face of the seal assembly (14, 38, 56,88, 87, 98, 134, 157, 170, 189, 200, 211) into a cavity (152) formed by the fore and aft sealing surfaces (74, 76) of the static member (18, 40, 62,80, 100, 119, 136, 162, 184, 192, 202, 226);
inserting the retaining extension (142) into an aperture (154) in the base (140) and extending the retaining extension (142) through an opening (156) in the static member (18, 40, 62,80, 100, 119, 136, 162, 184, 192, 202, 226); and
joining the retaining extension (142) to the base (140, 166).

8. The method of claim 6, wherein the movable member (20, 50, 66, 82, 102, 120, 120, 138, 168, 176, 210, 216) comprises a base (166) having the fore and aft sealing surfaces (70, 72) and a retaining extension (158), and wherein mounting the movable member (20, 50, 66, 82, 102, 120, 120, 138, 168, 176, 210, 216) on the static member (18, 40, 62,80, 100, 119, 136, 162, 184, 192, 202, 226) further comprises:
inserting the base (166) from an end face of the seal assembly (14, 38, 56,88, 87, 98, 134, 157, 170, 189, 200, 211) into a cavity formed by the fore and aft sealing surfaces (74, 76) of the static member (18, 40, 62,80, 100, 119, 136,162, 184, 192, 202, 226);
inserting the retaining extension (158) through an opening (160) in the static member (18, 40, 62,80, 100, 119, 136, 162, 184, 192, 202, 226) and positioning the retaining extension into a cavity (164) formed on the movable member; and
joining the retaining extension (158) to the base (166).

9. The method of claim 6, wherein the movable member (20, 50, 66, 82, 102, 120, 120, 138, 168, 176, 210, 216) comprises a base (178) and a retaining extension (180) formed integral to each other, and wherein mounting the movable member (20, 50, 66, 82, 102, 120, 120, 138, 168, 176, 210, 216) on the static member (18, 40, 62,80, 100, 119, 136, 162, 184, 192, 202, 226) comprises:
slidably inserting the movable member (20, 50, 66, 82, 102, 120, 120, 138, 168, 176, 210, 216) via an opening (186, 194) provided in an end face (188, 190) of the static member (18, 40, 62,80, 100, 119, 136, 162, 184, 192, 202, 226); and
sealingly plugging the opening (186, 194).

## Patentansprüche

1. Dichtungsanordnung (14, 38, 56, 88, 87, 98, 134, 157, 170, 200, 211) für eine drehende Maschine (10), umfassend:
ein statisches Element (18, 40, 62, 80, 100, 119, 136, 162, 184, 192, 202, 226), das dafür eingerichtet ist, zwischen einem Vorderende (34, 58, 172) und einem hinteren Ende (36, 60, 174) der drehenden Maschine (10) starr an der drehenden Maschine (10) befestigt zu werden;
ein auf dem statischen Element (18, 40, 62, 80, 100, 119, 136, 162, 184, 192, 202, 226) montiertes bewegliches Element (20, 50, 66, 82, 102, 120, 138, 168, 176, 210, 216), wobei das bewegliche Element (20, 50, 66, 82, 102, 120, 138, 168, 176, 210, 216) weiter umfasst:
eine erste Dichtfläche (48), die dafür eingerichtet ist, in einer Dichtungsposition gegen ein drehendes Element (12, 39) abzudichten;
eine Rückseite, die dafür eingerichtet ist, einem Fluiddruck ausgesetzt zu werden, um die erste Dichtfläche (48) in Richtung auf die Dichtungsposition zu drücken, und
Dichtflächen (70, 72, 108, 110) entlang den Vorder-, Rück- und Endflächen des beweglichen Elementes (20, 50, 66, 82, 102, 120, 138, 168, 176, 210, 216), die dafür eingerichtet sind, sich mit den Dichtflächen (74, 76, 112, 114) entlang den Vorder-, Rück- und Endflächen des statischen Elementes (18, 40, 62, 80, 100, 119, 136, 162, 184, 192, 202, 226) zu verbinden, um so eine Abdichtung zwischen dem statischen Element (18, 40, 62, 80, 100, 119, 136, 162, 184, 192, 202, 226) und dem beweglichen Element (20, 50, 66, 82, 102, 120, 138, 168, 176, 210, 216) an den Vorder-, Rück- und Endflächen des statischen Elementes (18, 40, 62, 80, 100, 119, 136, 162, 184, 192, 202, 226) und des beweglichen Elementes (20, 50, 66, 82, 102, 120, 138, 168, 176, 210, 216) zu schaffen, und
ein Vorspannelement (52, 206, 212, 214), das dafür eingerichtet ist, das bewegliche Element (20, 50, 66, 82, 102, 120, 138, 168, 176, 210, 216) auf dem statischen Element (18, 40, 62, 80, 100, 119, 136, 162, 184, 192, 202, 226) zu halten und das bewegliche Element (20, 50, 66, 82, 102, 120, 138, 168, 176, 210, 216) von der Dichtungsposition weg zu drücken, **dadurch gekennzeichnet, dass** die Dichtflächen entlang der Vorder- und Rückflächen des beweglichen Elementes (20, 50, 66, 82, 102, 120, 138, 168, 176, 210, 216) abgeschrägte Flächen (70, 72) umfassen, die dafür geeignet sind, mit den abgeschrägten Flächen (74, 76) entlang den Vorder- und Rückflächen des statischen Elementes (18, 40, 62, 80, 100, 119, 136, 162, 184, 192, 202, 226) ausgerichtet zu werden.

2. Dichtungsanordnung (14, 38, 56, 88, 87, 98, 134, 157, 170, 200, 211) nach Anspruch 1, wobei das bewegliche Element (20, 50, 66, 82, 102, 120, 138, 168, 176, 210, 216) weiter einen Haltefortsatz aufweist, der sich durch einen Schlitz in das statische Element (18, 40, 62, 80, 100, 119, 136, 162, 184, 192, 202, 226) erstreckt.

3. Dichtungsanordnung (14, 38, 56, 88, 87, 98, 134, 157, 170, 200, 211) nach Anspruch 1, wobei das Vorspannelement eine Blattfeder (206) aufweist.

4. Dichtungsanordnung (14, 38, 56, 88, 87, 98, 134, 157, 170, 200, 211) nach Anspruch 1, wobei das Vorspannelement eine Auslegerfeder (214, 216) aufweist.

5. Dichtungsanordnung (14, 38, 56, 88, 87, 98, 134, 157, 170, 200, 211) nach Anspruch 1, wobei das bewegliche Element (20, 50, 66, 82, 102, 120, 138, 168, 176, 210, 216) einen Ansatz (108, 110) aufweist, der dafür eingerichtet ist, sich mit einem Ansatz (112, 114) zu überlagern, der sich auf dem statischen Element (18, 40, 62, 80, 100, 119, 136, 162, 184, 192, 202, 226) an der Endfläche (104, 106) des statischen Elementes (18, 40, 62, 80, 100, 119, 136, 162, 184, 192, 202, 226) befindet.

6. Herstellungsverfahren für eine Dichtungsanordnung (14, 38, 56, 88, 87, 98, 134, 157, 170, 200, 211), beinhaltend:
die Montage eines beweglichen Elementes (20, 50, 66, 82, 102, 120, 138, 168, 176, 210, 216) auf einem statischen Element (18, 40, 62, 80, 100, 119, 136, 162, 184, 192, 202, 226);
das Ausrichten der vorderen und hinteren Dichtflächen (70, 72) des beweglichen Elementes (20, 50, 66, 82, 102, 120, 138, 168, 176, 210, 216) mit den vorderen und hinteren Dichtflächen (74, 76) des statischen Elementes (18, 40, 62, 80, 100, 119, 136, 162, 184, 192, 202, 226) an einem Vorderende (34, 58, 172) und einem hinteren Ende (36, 60, 174) der Dichtungsanordnung (14, 38, 56, 88, 87, 98, 134, der Dichtungsanordnung (14, 38, 56, 88, 87, 98, 134, 157, 170, 200, 211);
das Bereitstellen von zumindest einer Öffnung (42, 68, 156, 160) an dem statischen Element (18, 40, 62, 80, 100, 119, 136, 162, 184, 192, 202, 226), wobei die Öffnung (42, 68, 156, 160) dafür eingerichtet ist, das bewegliche Element (20, 50, 66, 82, 102, 120, 138, 168, 176, 210, 216) einem Gasdruck auszusetzen, um das bewegliche Element (20, 50, 66, 82, 102, 120, 138, 168, 176, 210, 216) in eine Dichtungsposition zu drücken, und
die Anordnung eines Vorspannelementes (52, 206, 212, 214) auf dem beweglichen Element (20, 50, 66, 82, 102, 120, 138, 168, 176, 210, 216), um das bewegliche Element (20, 50, 66, 82, 102, 120, 138, 168, 176, 210, 216) auf dem statischen Element (18, 40, 62, 80, 100, 119, 136, 162, 184, 192, 202, 226) zu halten, und um das bewegliche Element (20, 50, 66, 82, 102, 120, 138, 168, 176, 210, 216) von der Dichtungsposition wegzudrücken, **dadurch gekennzeichnet, dass**
das Ausrichten der vorderen und hinteren Dichtflächen (70, 72) des beweglichen Elementes (20, 50, 66, 82, 102, 120, 138, 168, 176, 210, 216) mit den vorderen und hinteren Dichtflächen (74, 76) des statischen Elementes (18, 40, 62, 80, 100, 119, 136, 162, 184, 192, 202, 226) das Ausrichten der abgeschrägten Flächen (70, 72) der vorderen und hinteren Dichtflächen (70, 72) des beweglichen Elementes (20, 50, 66, 82, 102, 120, 138, 168, 176, 210, 216) mit den abgeschrägten Flächen (74, 76) des statischen Elementes (18, 40, 62, 80, 100, 119, 136, 162, 184, 192, 202, 226) entlang der Vorder- und Rückflächen des statischen Elementes (18, 40, 62, 80, 100, 119, 136, 162, 184, 192, 40, 62, 80, 100, 119, 136, 162, 184, 192, 202, 226) beinhaltet.

7. Verfahren nach Anspruch 6, wobei das bewegliche Element (20, 50, 66, 82, 102, 120, 138, 168, 176, 210, 216) eine Basis (14) mit den vorderen und hinteren Dichtflächen (70, 72) und einem Haltefortsatz (142, 158) enthält und wobei die Montage des beweglichen Elementes (20, 50, 66, 82, 102, 120, 138, 168, 176, 210, 216) auf dem statischen Element (18, 40, 62, 80, 100, 119, 136, 162, 184, 192, 202, 226) weiter beinhaltet:
das Einsetzen der Basis von einer Endfläche der Dichtungsanordnung (14, 38, 56, 88, 87, 98, 134, 157, 170, 200, 211) aus in einen durch die vorderen und hinteren Dichtflächen (74, 76) des statischen Elementes (18, 40, 62, 80, 100, 119, 136, 162, 184, 192, 202, 226) gebildeten Hohlraum (152);
das Einsetzen des Haltefortsatzes (142) in eine Öffnung (154) in der Basis (140) und das Sich-Erstrecken des Haltefortsatzes (142) durch eine Öffnung (156) in dem statischen Element (18, 40, 62, 80, 100, 119, 136, 162, 184, 192, 202, 226), und
die Verbindung des Haltefortsatzes (142) mit der Basis (140, 166).

8. Verfahren nach Anspruch 6, wobei das bewegliche Element (20, 50, 66, 82, 102, 120, 138, 168, 176, 210, 216) eine Basis (166) mit den vorderen und hinteren Dichtflächen (70, 72) und einem Haltefortsatz (158) umfasst, und wobei die Montage des beweglichen Elementes (20, 50, 66, 82, 102, 120, 138, 168, 176, 210, 216) auf dem statischen Element (18, 40, 62, 80, 100, 119, 136, 162, 184, 192, 202, 226) weiter beinhaltet:
das Einsetzen der Basis (166) von einer Endfläche der Dichtungsanordnung (14, 38, 56, 88, 87, 98, 134, 157, 170, 200, 211) aus in einen durch die vorderen und hinteren Dichtflächen (74, 76) des statischen Elementes (18, 40, 62, 80, 100, 119, 136, 162, 184, 192, 202, 226) gebildeten Hohlraum;
das Einsetzen des Haltefortsatzes (158) durch eine Öffnung (160) in dem statischen Element (18, 40, 62, 80, 100, 119, 136, 162, 184, 192, 202, 226) und die Positionierung des Haltefortsatzes (142) in einem in dem beweglichen Element ausgebildeten Hohlraum (165) und
die Verbindung des Haltefortsatzes (158) mit der Basis (166).

9. Verfahren nach Anspruch 6, wobei das bewegliche Element (20, 50, 66, 82, 102, 120, 138, 168, 176, 210, 216) eine Basis (178) und einem Haltefortsatz (180) umfasst, die integriert ausgebildet sind, und wobei die Montage des beweglichen Elementes (20, 50, 66, 82, 102, 120, 138, 168, 176, 210, 216) auf dem statischen Element (18, 40, 62, 80, 100, 119, 136, 162, 184, 192, 202, 226) beinhaltet:
das verschiebbare Einsetzen des beweglichen Elementes (20, 50, 66, 82, 102, 120, 138, 168, 176, 210, 216) durch eine Öffnung (186, 194) in einer Endfläche (188, 190) des statischen Elementes (18, 40, 62, 80, 100, 119, 136, 162, 184, 192, 202, 226) und
das abdichtende Verschließen der Öffnung (186, 194).

## Revendications

1. Ensemble d'étanchéité (14, 38, 56, 88, 87, 98, 134, 157, 170, 200, 211) pour une machine rotative (10), comprenant :
un élément statique (18, 40, 62, 80, 100, 119, 136, 162, 184, 192, 202, 226) adapté pour être fixé de façon rigide sur la machine rotative (10) entre une extrémité avant (34, 58, 172) et une extrémité arrière (36, 60, 174) de la machine rotative (10) ;
un élément mobile (20, 50, 66, 82, 102, 120, 120, 138, 168, 176, 210, 216) monté sur l'élément statique (18, 40, 62, 80, 100, 119, 136, 162, 184, 192, 202, 226), l'élément mobile (20, 50, 66, 82, 102, 120, 120, 138, 168, 176, 210, 216) comprenant en outre :
une première surface d'étanchéité (48) configurée pour être scellée contre un élément rotatif (12, 39) dans une position étanche ;
une surface arrière (46) adaptée pour être exposée à une pression de fluide pour pousser la première surface d'étanchéité (48) vers la position étanche ; et
des surfaces d'étanchéité (70, 72, 108, 110) le long des faces avant, arrière et d'extrémité de l'élément mobile (20, 50, 66, 82, 102, 120, 120, 138, 168, 176, 210, 216) adaptées pour réaliser une interface avec les surfaces d'étanchéité (74, 76, 112, 114) le long des faces avant, arrière et d'extrémité de l'élément statique (18, 40, 62, 80, 100, 119, 136, 162, 184, 192, 202, 226), afin de sceller entre l'élément statique (18, 40, 62, 80, 100, 119, 136, 162, 184, 192, 202, 226) et l'élément mobile (20, 50, 66, 82, 102, 120, 120, 138, 168, 176, 210, 216) sur les faces avant, arrière et d'extrémité de l'élément statique (18, 40, 62, 80, 100, 119, 136, 162, 184, 192, 202, 226) et l'élément mobile (20, 50, 66, 82, 102, 120, 120, 138, 168, 176, 210, 216) ; et
un élément d'inclinaison (52, 206, 212, 214) configuré pour soutenir l'élément mobile (20, 50, 66, 82, 102, 120, 120, 138, 168, 176, 210, 216) sur l'élément statique (18, 40, 62, 80, 100, 119, 136, 162, 184, 192, 202, 226) et pour pousser l'élément mobile (20, 50, 66, 82, 102, 120, 120, 138, 168, 176, 210, 216) loin de la position étanche **caractérisé en ce que** les surfaces d'étanchéité le long des faces avant et arrière de l'élément mobile (20, 50, 66, 82, 102, 120, 120, 138, 168, 176, 210, 216) comprennent des surfaces biseautées (70, 72) adaptées pour s'aligner avec les surfaces biseautées (74, 76) le long des faces avant et arrière de l'élément statique (18, 40, 62, 80, 100, 119, 136, 162, 184, 192, 202, 226).

2. Ensemble d'étanchéité (14, 38, 56, 88, 87, 98, 134, 157, 170, 200, 211) selon la revendication 1, dans lequel l'élément mobile (20, 50, 66, 82, 102, 120, 120, 138, 168, 176, 210, 216) comprend en outre une extension de retenue s'étendant à travers une fente dans l'élément statique (18, 40, 62, 80, 100, 119, 136, 162, 184, 192, 202, 226).

3. Ensemble d'étanchéité (14, 38, 56, 88, 87, 98, 134, 157, 170, 200, 211) selon la revendication 1, dans lequel l'élément d'inclinaison comprend un ressort à lames (206).

4. Ensemble d'étanchéité (14, 38, 56, 88, 87, 98, 134, 157, 170, 200, 211) selon la revendication 1, dans lequel l'élément d'inclinaison comprend un ressort (214, 216) en porte-à-faux.

5. Ensemble d'étanchéité (14, 38, 56, 88, 87, 98, 134, 157, 170, 200, 211) selon la revendication 1, dans lequel l'élément mobile (20, 50, 66, 82, 102, 120, 120, 138, 168, 176, 210, 216) comprend une lèvre (108, 110) configurée pour chevaucher une lèvre (112, 114) fournie sur l'élément statique (18, 40, 62, 80, 100, 119, 136, 162, 184, 192, 202, 226) sur la face d'extrémité (104, 106) de l'élément statique (18, 40, 62, 80, 100, 119, 136, 162, 184, 192, 202, 226).

6. Procédé pour fabriquer un ensemble d'étanchéité (14, 38, 56, 88, 87, 98, 134, 157, 170, 200, 211), comprenant :
monter un élément mobile (20, 50, 66, 82, 102, 120, 120, 138, 168, 176, 210, 216) sur un élément statique (18, 40, 62, 80, 100, 119, 136, 162, 184, 192, 202, 226) ;
aligner des surfaces (70, 72) avant et arrière d'étanchéité de l'élément mobile (20, 50, 66, 82, 102, 120, 120, 138, 168, 176, 210, 216) avec les surfaces (74, 76) avant et arrière d'étanchéité sur l'élément statique (18, 40, 62, 80, 100, 119, 136, 162, 184, 192, 202, 226) à une extrémité avant (34, 58, 172) et une extrémité arrière (36, 60, 174) de l'ensemble d'étanchéité (14, 38, 56, 88, 87, 98, 134, 157, 170, 200, 211) ;
fournir au moins une ouverture (42, 68, 156, 160) sur l'élément statique (18, 40, 62, 80, 100, 119, 136, 162, 184, 192, 202, 226) dans lequel l'ouverture (42, 68, 156, 160) est configurée pour exposer l'élément mobile (20, 50, 66, 82, 102, 120, 120, 138, 168, 176, 210, 216) à une pression de gaz pour pousser l'élément mobile (20, 50, 66, 82, 102, 120, 120, 138, 168, 176, 210, 216) vers une position étanche ; et
disposer un élément d'inclinaison (52, 206, 212, 214) sur l'élément mobile (20, 50, 66, 82, 102, 120, 120, 138, 168, 176, 210, 216) pour supporter l'élément mobile (20, 50, 66, 82, 102, 120, 120, 138, 168, 176, 210, 216) sur l'élément statique (18, 40, 62, 80, 100, 119, 136, 162, 184, 192, 202, 226) et pour pousser l'élément mobile (20, 50, 66, 82, 102, 120, 120, 138, 168, 176, 210, 216) loin de la position étanche **caractérisé en ce que**
l'alignement des surfaces avant et arrière (70, 72) d'étanchéité de l'élément mobile (20, 50, 66, 82, 102, 120, 120, 138, 168, 176, 210, 216) avec les surfaces avant et arrière (74, 76) d'étanchéité sur l'élément statique (18, 40, 62, 80, 100, 119, 136, 162, 184, 192, 202, 226) comprend des surfaces biseautées (70, 72) d'alignement des surfaces avant et arrière d'étanchéité de l'élément mobile (20, 50, 66, 82, 102, 120, 120, 138, 168, 176, 210, 216) avec des surfaces biseautées (74, 76) sur l'élément statique (18, 40, 62, 80, 100, 119, 136, 162, 184, 192, 202, 226) le long des faces avant et arrière de l'élément statique (18, 40, 62, 80, 100, 119, 136, 162, 184, 192, 202, 226).

7. Procédé selon la revendication 6, dans lequel l'élément mobile (20, 50, 66, 82, 102, 120, 120, 138, 168, 176, 210, 216) comprend une base (14) ayant les surfaces avant et arrière (70, 72) d'étanchéité et une extension de retenue (142, 158), et dans lequel le montage de l'élément mobile (20, 50, 66, 82, 102, 120, 120, 138, 168, 176, 210, 216) sur l'élément statique (18, 40, 62, 80, 100, 119, 136, 162, 184, 192, 202, 226) comprend en outre :
insérer la base à partir d'une face d'extrémité de l'ensemble d'étanchéité (14, 38, 56, 88, 87, 98, 134, 157, 170, 200, 211) dans une cavité (152) formée par les surfaces avant et arrière (74, 76) d'étanchéité de l'élément statique (18, 40, 62, 80, 100, 119, 136, 162, 184, 192, 202, 226) ;
insérer l'extension de retenue (142) dans une ouverture (154) dans la base et étendre l'extension de retenue (142) à travers une ouverture (156) dans l'élément statique (18, 40, 62, 80, 100, 119, 136, 162, 184, 192, 202, 226) ; et
lier l'extension de retenue (142) à la base (140, 166).

8. Procédé selon la revendication 6, dans lequel l'élément mobile (20, 50, 66, 82, 102, 120, 120, 138, 168, 176, 210, 216) comprend une base (166) ayant les surfaces avant et arrière (70, 72) d'étanchéité et une extension de retenue (158), et dans lequel le montage de l'élément mobile (20, 50, 66, 82, 102, 120, 120, 138, 168, 176, 210, 216) sur l'élément statique (18, 40, 62, 80, 100, 119, 136, 162, 184, 192, 202, 226) comprend en outre :
insérer la base (166) à partir d'une face d'extrémité de l'ensemble d'étanchéité (14, 38, 56, 88, 87, 98, 134, 157, 170, 200, 211) dans une cavité formée par les surfaces avant et arrière (74, 76) d'étanchéité de l'élément statique (18, 40, 62, 80, 100, 119, 136, 162, 184, 192, 202, 226) ;
insérer l'extension de retenue (158) à travers une ouverture (160) dans l'élément statique (18, 40, 62, 80, 100, 119, 136, 162, 184, 192, 202, 226) et le positionnement de l'extension de retenue dans une cavité (164) formée sur l'élément mobile ; et
lier l'extension de retenue (158) à la base (166).

9. Procédé selon la revendication 6, dans lequel l'élément mobile (20, 50, 66, 82, 102, 120, 120, 138, 168, 176, 210, 216) comprend une base (178) et une extension de retenue (180) formées solidairement, et dans lequel le montage de l'élément mobile (20, 50, 66, 82, 102, 120, 120, 138, 168, 176, 210, 216) sur l'élément statique (18, 40, 62, 80, 100, 119, 136, 162, 184, 192, 202, 226) comprend :
insérer en coulissement l'élément mobile (20, 50, 66, 82, 102, 120, 120, 138, 168, 176, 210, 216) via une ouverture (186, 194) fournie dans une face d'extrémité (188, 190) de l'élément statique (18, 40, 62, 80, 100, 119, 136, 162, 184,192,202,226);et
boucher l'ouverture (186, 194) de façon étanche.
